# FASCICULE DE BREVET EUROPEEN

(11) **EP 2 841 986 B1**
(45) Date de publication et mention de la délivrance du brevet: **04.03.2020**
(21) Numéro de dépôt: 13778997.0
(22) Date de dépôt: 15.04.2013
(51) Int. Cl.: G02C 11/02, G02C 5/14

(54) **MONTURE DE LUNETTES AVEC PIECE DECORATIVE**
BRILLENFASSUNG MIT EINEM ZIERSTÜCK
EYEGLASS FRAME WITH DECORATIVE PIECE

(30) Priorité: 19.04.2012 FR 1253598
(43) Date de publication de la demande: 04.03.2015
(73) Titulaire: Killine Optical Ltd, Macao (MO)
(72) Inventeur: GARDAZ, François, Macao (MO)
(74) Mandataire: Chevalier, Renaud Philippe
(86) Numéro de dépôt international: PCT/IB2013/001059
(87) Numéro de publication internationale: WO 2013/156857

(56) Documents cités:
- CN-Y- 2 423 596
- CN-Y- 2 909 306
- CN-Y- 2 914 124
- CN-Y- 201 392 436
- DE-U1-202010 002 797
- FR-A1- 2 886 024
- FR-A1- 2 912 229
- FR-A1- 2 986 338
- GB-A- 938 560
- KR-A- 20090 025 111
- US-A1- 2012 075 571
- US-A1- 2012 075 571

## Description

La présente invention se rapporte à une monture de lunettes, à un ensemble optique comprenant une telle monture décorée au moyen d'une pièce décorative conçue pour être fixée temporairement sur une telle monture et à des lunettes correspondantes.

De façon connue, des lunettes comportent une monture destinée à supporter des verres pour être portée par un utilisateur. La monture comporte une face optique destinée à supporter les verres, avec ou sans cercle, et deux branches articulées sur deux parties d'extrémité de la face optique entre une position ouverte (avec les branches déployées pour que les lunettes soient portées) et une position fermé (avec les branches rabattues contre la face optique).

Classiquement, une branche présente au moins une surface longitudinale interne non visible une fois les lunettes portées, et au moins une surface longitudinale externe visible une fois les lunettes portées. La branche peut par ailleurs présenter plusieurs formes de section transversale, par exemple plate, circulaire, triangulaire, rectangulaire, carrée, etc. Ainsi, une branche à section plate présente deux surfaces longitudinales interne et externe sensiblement planes, une branche à section circulaire présente deux surfaces longitudinales interne et externe bombées, une branche à section triangulaire présente une surface longitudinale interne plane et deux surfaces longitudinales externes planes en biseau, une branche à section rectangulaire ou carrée présente une surface longitudinale interne plane et trois surfaces longitudinales planes respectivement latérale, supérieure et inférieure, etc. Une branche présente également une petite surface d'extrémité avant s'étendant transversalement aux deux surfaces longitudinales sur une extrémité avant de la branche, et plus particulièrement s'étendant sensiblement orthogonalement à la direction principale longitudinale de la branche.

L'articulation se présente généralement sous la forme d'une charnière comportant un charnon fixe fixé sur la partie d'extrémité de la face optique, un charnon mobile fixé sur l'extrémité avant de la branche, notamment sur sa surface longitudinale interne, et un axe d'articulation liant en rotation les deux charnons et s'étendant sensiblement parallèlement à la surface d'extrémité avant de la branche et sensiblement orthogonalement à la direction principale longitudinale de la branche.

Lorsque la branche est ouverte, la surface d'extrémité avant de la branche est en face d'une surface d'extrémité arrière de la partie d'extrémité concernée de la face optique. Cette partie d'extrémité peut se présenter sous la forme d'un tenon saillant vers l'arrière de la face optique ou bien d'une partie de la face optique s'étendant sur l'extérieur à côté des verres.

Pour décorer une monture de lunettes, il est connu du document US 3 582 192 A de prévoir une pièce décorative pour branche de lunettes qui est montée à coulissement autour de la branche, la branche formant un rail sur laquelle est glissée la pièce décorative de section en U. Pour assurer le maintien de cette pièce décorative, une bande compressible et magnétique est prévue sur la surface longitudinale externe de la branche.

Il est également connu du document US 2007/0242211 de prévoir une encoche formant une glissière en queue d'aronde dans la surface longitudinale externe de la branche pour recevoir une pièce décorative qui est engagée par coulissement dans cette glissière.

Il est également connu du document FR 2 886 024 A1 de fixer un élément d'ornement ou enjoliveur sur une branche de lunettes, au moyen d'une rainure prévue sur l'extrémité avant de la face intérieure de la branche pour recevoir un crochet de l'enjoliveur, d'un trou ménagée sur la surface longitudinale externe de la branche, du côté de son extrémité arrière, pour recevoir un picot de l'enjoliveur, et d'un élément de retenue disposé dans un logement prévu sur la surface longitudinale externe de la branche, entre l'extrémité avant et le trou, cet élément de retenue étant notamment un aimant, une bande adhésive, un dispositif d'encliquetage, ou un système par bande auto-aggripante.

Ces lunettes présentent cependant l'inconvénient que, une fois la pièce décorative retirée, la branche présente est très peu esthétique, à la fois pour les lunettes du document US 3 582 192 A où la bande compressible et magnétique restent en place, pour les lunettes du document US 2007/0242211 où l'encoche reste visible, et pour les lunettes du document FR 2 886 024 A1 où non seulement la rainure, le trou et/ou l'élément de retenue restent visibles une fois l'enjoliveur retiré mais également le non alignement des surfaces externes de la branche et de la partie d'extrémité de la face optique, de sorte qu'il est peu recommandé esthétiquement de se passer des pièces décoratives avec de telles montures. Autre document pertinent de l'état de la technique qui montre la fixation d'un élément d'ornement sur une branche de lunettes est le document DE202010002797U1.

Il est par ailleurs connu du document US 4 903 375 de prévoir le montage d'une pince élastique sur une branche de lunettes pour un maintien sur une poche de vêtement. La fixation de la pince sur la branche est obtenue au moyen d'anneaux élastiques qui serrent une patte de la pince contre la branche ; ces anneaux étant par ailleurs engagés dans des encoches annulaires prévues sur le pourtour de la branche. Sans compter la difficulté d'engager la patte de la pince dans les anneaux, les encoches annulaires et les anneaux sur la branche sont particulièrement inesthétiques, surtout lorsque la pince est absente.

La présente invention a pour but de résoudre ces inconvénients en proposant une monture de lunettes et une pièce décorative conformées pour coopérer ensemble afin de modifier l'aspect de la monture, tout en ne nuisant pas à l'esthétique de la monture une fois la pièce décorative retirée, permettant ainsi de rendre la pièce décorative comme un moyen optionnel pour modifier l'aspect de la branche.

A cet effet, elle propose une monture de lunettes comportant une face optique destinée à supporter des verres et deux branches articulées sur deux parties d'extrémité de ladite face optique entre une position ouverte et une position fermé, chaque branche présentant au moins une surface longitudinale interne et au moins une surface longitudinale externe s'étendant dans la longueur de la branche, et une surface d'extrémité avant s'étendant transversalement aux surfaces longitudinales sur une extrémité avant de ladite branche, ladite surface d'extrémité avant s'étendant en face d'une surface d'extrémité arrière de la partie d'extrémité concernée de la face optique lorsque la branche est en position ouverte, ladite monture comportant en outre au moins un moyen de réception d'une pièce décorative destinée à être rapportée de manière temporaire sur ladite monture, cette monture étant remarquable en ce que ledit ou chaque moyen de réception est constitué d'un trou oblong ménagé dans une branche et débouchant uniquement dans sa surface d'extrémité avant ou d'un trou oblong ménagé dans une partie d'extrémité de la face optique et débouchant uniquement dans sa surface d'extrémité arrière, ledit ou chaque trou oblong étant destiné à former une glissière de réception de la pièce décorative.

De la sorte, cette monture est particulièrement avantageuse dans la mesure où la glissière de réception et de maintien temporaire de la pièce décorative est ménagée sous la forme d'un trou oblong, débouchant uniquement dans la surface d'extrémité avant de la branche ou dans la surface d'extrémité arrière de la partie d'extrémité de la face optique, de sorte que ce trou oblong n'est pas visible de côté une fois la branche en position ouverte, sauf à ce que la branche soit constituée dans un matériau transparent.

Pour insérer la pièce décorative, il suffit alors de fermer la branche, autrement dit rabattre au moins partiellement celle-ci contre la face optique, pour découvrir le trou oblong qui va recevoir la pièce décorative. En l'absence de pièce décorative et lorsque les lunettes sont portées, le trou oblong est invisible de côté, sauf à ce que la branche soit constituée dans un matériau transparent, et donc l'aspect de la branche n'est principalement pas modifiée. Le ou chaque trou oblong s'étend parallèlement à la direction principale longitudinale de la branche lorsque la branche est en position ouverte.

Selon une caractéristique, le ou chaque trou oblong présente, à partir de la surface d'extrémité concernée, une portion d'entrée rectiligne prolongée par une portion terminale inclinée par rapport à la portion d'entrée pour former une rampe intérieure.

Une telle forme est particulièrement avantageuse pour assurer un maintien élastique de la pièce décorative dans le trou oblong ; cette pièce décorative présentant une épingle décrite avec plus de précision ultérieurement qui pourra se détendre par effet ressort dans cette rampe et ainsi se bloquer à l'intérieur du trou.

Dans une réalisation particulière, le ou chaque trou oblong est ménagé dans la matière constitutive de la branche ou de la partie d'extrémité de la face optique.

Dans une autre réalisation, le trou oblong est prévu dans un insert fixé dans une encoche ménagée dans la branche ou dans la partie d'extrémité de la face optique.

Selon une possibilité de l'invention, le ou chaque trou oblong débouche dans une surface d'extrémité et vient directement en regard de l'autre surface d'extrémité en vis-à-vis lorsque la branche est en position ouverte, de sorte que ledit trou oblong est recouvert par cette autre surface d'extrémité en vis-à-vis lorsque la branche est en position ouverte.

Si le trou oblong est ménagé dans une branche alors ce trou oblong est recouvert par la surface d'extrémité arrière de la partie d'extrémité de la face optique, tandis que si le trou oblong est ménagé dans la partie d'extrémité de la face optique alors ce trou oblong est recouvert par la surface d'extrémité avant de la banche, de sorte que le trou oblong est quasiment invisible lorsque la branche est ouverte.

Selon une autre possibilité de l'invention, les parties d'extrémité de la face optique sont sensiblement jointives, et de préférence en arasement, avec les surfaces longitudinales externes des branches, un jeu étant prévu entre les surfaces d'extrémité, respectivement avant et arrière, desdites branches et desdites parties d'extrémité. Un tel jeu est nécessaire pour permettre le passage de l'élément de liaison de la pièce décorative décrite avec plus de précision ci-après.

L'invention se rapporte aussi à un ensemble optique pour lunettes comprenant :
- une monture conforme à l'invention ; et
- au moins une pièce décorative comprenant au moins une épingle élastiquement déformable prévue pour être glissée à l'intérieur d'au moins un trou oblong de la monture, au moins un élément décoratif prévue pour s'étendre à l'extérieur du trou oblong et de la monture, notamment en regard de la surface longitudinale externe de la branche et/ou en regard de la partie d'extrémité de la face optique, et un élément de liaison entre l'épingle et l'élément décoratif ;
où la ou chaque épingle est engagée et maintenue à l'intérieur d'un trou oblong de la monture, l'élément de liaison s'étend entre les deux surfaces d'extrémité concernées de la branche et de la face optique lorsque ladite branche est en position ouverte, et l'élément décoratif s'étend à l'extérieur du trou oblong et de la monture.

Ainsi, la ou chaque épingle sert au maintien de la pièce décorative sur la monture en s'insérant à l'intérieur d'un trou oblong, et l'élément décoratif forme la partie décorative destinée à modifier l'aspect de la monture. Cette pièce décorative peut également servir comme pince pour accrocher les lunettes sur un support, comme une poche de vêtement, ou comme pendentif de collier.

Avantageusement, l'épingle présente une forme courbe, avec notamment une portion initiale rectiligne prolongée par une portion terminale courbée, permettant ainsi un blocage par effet ressort à l'intérieur du trou oblong de la monture.

Dans un mode de réalisation particulier, la patte externe est sensiblement plate, pour rester relativement discrète sur la branche.

L'invention a également trait à des lunettes comportant un ensemble optique tel que décrit ci-dessus.

D'autres caractéristiques et avantages de la présente invention apparaîtront à la lecture de la description détaillée ci-après, de plusieurs exemples de mise en œuvre non limitatifs, faite en référence aux figures annexées dans lesquelles :
- les figures 1a et 1b sont des vues schématiques de côté de lunettes conformes à l'invention avec la branche ouverte et respectivement avec et sans la pièce décorative ;
- les figures 2a et 2b sont des vues schématiques en perspective de première et deuxième branches pour des montures conformes à l'invention dont les trous oblongs sont ménagés dans les branches ;
- les figures 3a à 3e sont des vues schématiques de dessus et partielles d'une monture conforme à l'invention, à plusieurs étapes du montage de la pièce décorative sur une branche de la monture ;
- la figure 4a est une vue schématique de côté d'une branche pour une monture conforme à l'invention avec une pièce décorative ;
- la figure 4b est une vue schématique en coupe longitudinale, selon le plan de coupe C-C, de la branche de la figure 4a ;
- la figure 5 est une vue schématique de dessus et partielle d'une monture conforme à l'invention, avec une pièce décorative montée sur un tenon de la face optique de la monture.

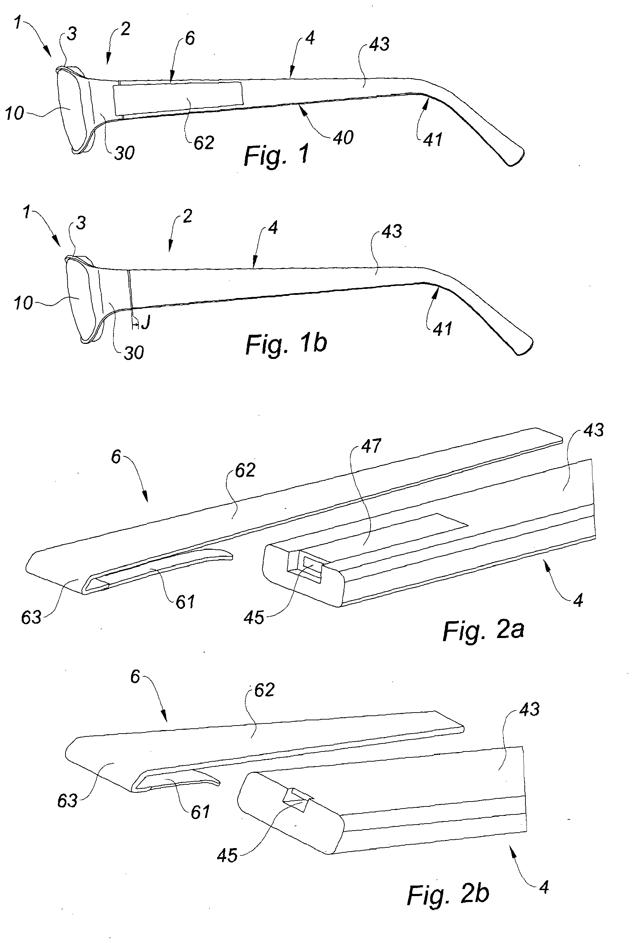

Les lunettes 1 conformes à l'invention sont décrites en référence aux figures 1 à 5 dans lesquelles les mêmes références sont employées pour illustrer des pièces identiques ou similaires.

Les lunettes 1 comprennent deux verres 10 supportées par une monture 2 comportant :
- une face optique 3 destinée à soutenir les verres 10, avec ou sans cercle ; et
- deux branches 4, respectivement droite et gauche, articulées sur la face optique 3 par l'intermédiaire d'articulations 5 du type charnière.

La face optique 3 présente deux parties d'extrémité 30, respectivement droite et gauche, sur lesquelles sont articulées les branches 2, et pouvant se présenter sous la forme de tenons dans les exemples des figures 1, 3 et 5. Chaque tenon 30 présente une surface d'extrémité arrière 31 sensiblement parallèle à l'axe d'articulation 52 de la charnière 5 correspondante.

La branche 4 se compose essentiellement de deux parties, à savoir une partie avant 40 rectiligne articulée sur la face 3 et s'étendant selon une direction principale longitudinale, et une partie arrière 41, généralement courbée, destinée à contourner l'arrière de l'oreille et à prendre appui sur l'oreille.

La branche 4 présente une surface longitudinale interne 42 et une surface longitudinale externe 43, et une surface d'extrémité avant 44 s'étendant transversalement aux deux surfaces longitudinales 42, 43 sur une extrémité avant de la branche 4. Chaque surface d'extrémité avant 44 est sensiblement orthogonale à la direction longitudinale de la branche 4, et sensiblement parallèle à la surface d'extrémité arrière 31 du tenon 3 correspondant lorsque la branche 4 est ouverte.

Lorsque la branche 4 est ouverte, la surface d'extrémité avant 44 n'est pas visible de côté car elle est sensiblement jointive de la surface d'extrémité arrière 31 du tenon 3 en venant en vis-à-vis de celle-ci avec seulement un jeu J réduit entre ces deux surfaces d'extrémité 44, 31, seule la surface longitudinale externe 43 étant visible, tout comme la surface externe du tenon 3 qui vient dans le prolongement de la surface longitudinale externe 43 de la branche 4.

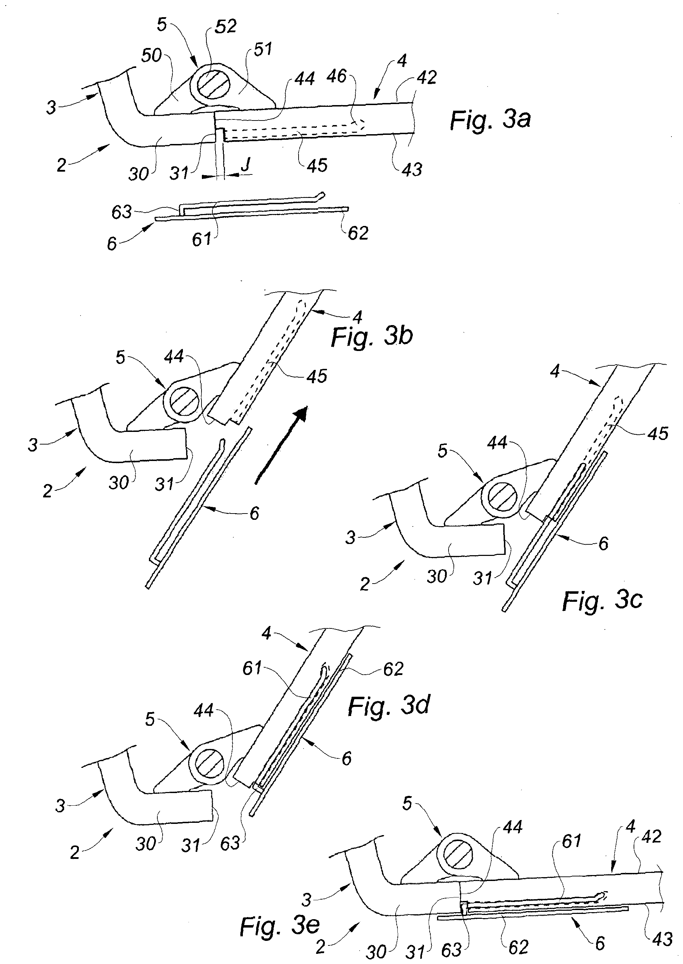

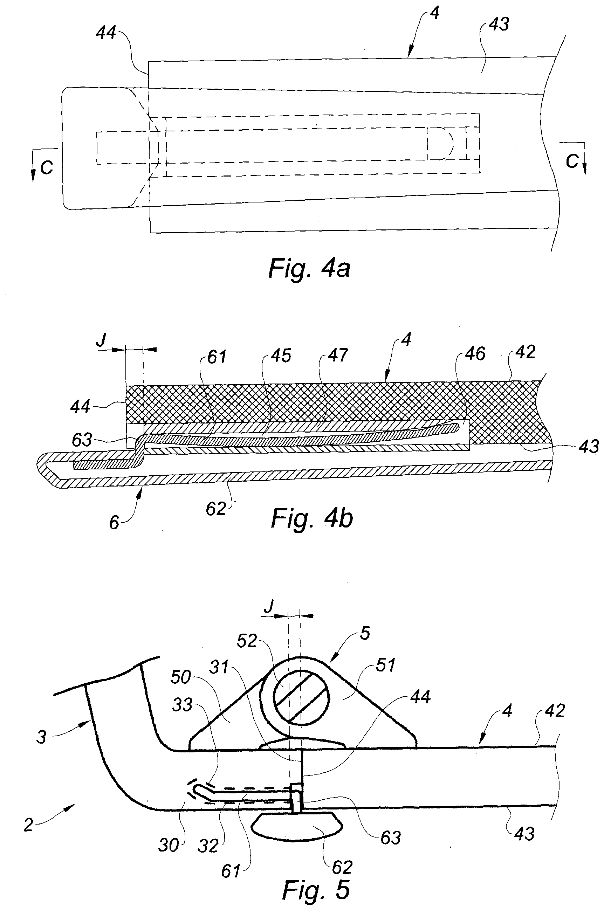

Dans les modes de réalisation des figures 2 à 4, chaque branche 4 présente un trou oblong 45 borgne débouchant dans la surface d'extrémité avant 44 et s'étendant orthogonalement à ladite surface d'extrémité avant 44, autrement dit selon la direction longitudinale de la branche 4. Comme visible sur les figures 3 et 4b, le trou oblong 45 présente, à partir de la surface d'extrémité avant 44, une portion d'entrée rectiligne et de section sensiblement constante prolongée par une portion terminale inclinée vers l'intérieur de la branche 4 par rapport à la portion d'entrée et définissant ainsi une rampe intérieure 46.

Dans l'exemple des figures 2b et 3, le trou oblong 45 est ménagé dans la matière constitutive de la branche 4, donc directement dans la branche 4. Dans l'exemple des figures 2a et 4, le trou oblong 45 est prévu dans un insert 47 fixé dans une encoche ménagée dans la branche 4, et plus particulièrement dans la surface longitudinale externe 43 ; l'insert 47 étant ainsi visible de côté quand les lunettes 1 sont portées, mais pas le trou oblong 45.

Dans le mode de réalisation de la figure 5, chaque tenon 30 présente un trou oblong 32 borgne débouchant dans la surface d'extrémité arrière 31 et s'étendant orthogonalement à ladite surface d'extrémité arrière 35, autrement dit selon la direction longitudinale de la branche 4 lorsque celle-ci est ouverte. Le trou oblong 32 présente, à partir de la surface d'extrémité arrière 31, une portion d'entrée rectiligne et de section sensiblement constante prolongée par une portion terminale inclinée vers l'intérieur du tenon 30 par rapport à la portion d'entrée et définissant ainsi une rampe intérieure 33.

L'articulation 5 comporte un charnon fixe 50 fixée sur le tenon 30 de la face optique 3 et un charnon mobile 51 fixée sur la surface longitudinale interne 42 de la branche 4, avec un axe d'articulation 52 liant en rotation les deux charnons 50, 51.

Conformément à l'invention, les lunettes 1 comprennent également au moins deux pièces décoratives 6, au moins une pièce décorative 6 par branche 4 et/ou au moins une pièce décorative 6 par tenon 3. Chaque pièce décorative 6 comprend une épingle 61 élastiquement déformable formant une tige allongée prévue pour s'engager et être maintenue à l'intérieur du trou oblong 45, 32 de la branche 4 ou du tenon 30 concerné. Il est également possible de prévoir une pièce décorative 6 comportant plusieurs épingles 61 venant s'engager dans plusieurs trous oblongs 45 ou 32.

La pièce décorative 6 comprend en outre un élément décoratif 62 relié à l'épingle 61 au moyen d'un élément de liaison 63, cet élément décoratif 62 étant prévu pour s'étendre à l'extérieur du trou oblong 45, 32 et venir en regard de la surface longitudinale externe 43 de la branche 4 et/ou du tenon 30 côté externe.

L'épingle 61 présente une forme courbe, avec une extrémité libre qui se courbe à l'opposée de l'élément décoratif 62 en s'en éloignant, et est réalisée dans un matériau élastiquement déformable comme par exemple en métal ou en plastique.

La pièce décorative 6 peut être réalisée d'un seul tenant ou par assemblage de plusieurs éléments solidarisés entre eux, par exemple par soudage, collage, etc. L'élément décoratif 62 peut présenter différentes formes et configurations, comme par exemple une pièce plate comme dans les exemples des figures 1 à 4, ou une protubérance comme dans l'exemple de la figure 5, par exemple en forme de bouton, de boule, de papillon, de fleur, etc.

Pour fixer la pièce décorative 6 sur la monture 2, il faut d'abord fermer, au moins en partie, la branche 4, comme illustré sur les figures 3b à 3d, à partir de la position ouverte illustrée sur la figure 3a, afin de libérer l'accès au trou oblong 45 ou 32. Puis on insère l'épingle 61 de la pièce décorative 6 dans le trou oblong 45 ou 32, jusqu'à ce que l'extrémité courbée de l'épingle 61 se détende élastiquement au niveau de la rampe intérieure 46 ou 33 pour assurer un blocage de l'épingle 61 dans le trou oblong 45 ou 32. Et enfin on peut rouvrir la branche 4, comme illustrée sur la figure 3e, pour pouvoir porter les lunettes 1.

Un jeu J est prévu entre la surface d'extrémité avant 44 de la branche 4 et la surface d'extrémité arrière 31 du tenon 30, ce jeu J étant au moins équivalent à l'épaisseur de l'élément de liaison 63 de la pièce décorative 6 pour que celle-ci ne gêne pas l'ouverture complète de la branche 4 comme visible sur les figures 3e et 5. Dans les réalisations des figures 2 à 5, le trou oblong 45 ou 32 débouche en retrait par rapport à la surface d'extrémité 44 ou 31 concernée d'une profondeur équivalente à ce jeu J nécessaire au passage de l'élément de liaison 63.

Bien entendu l'exemple de mise en œuvre évoqué ci-dessus ne présente aucun caractère limitatif et d'autres améliorations et détails peuvent être apportés aux lunettes selon l'invention, sans pour autant sortir du cadre de l'invention où d'autres formes des articulations peuvent par exemple être réalisées.

## Revendications

1. Monture (2) de lunettes (1) comportant une face optique (3) destinée à supporter des verres (10) et deux branches (4) articulées sur deux parties d'extrémité (30) de ladite face optique (3) entre une position ouverte et une position fermé, chaque branche (4) présentant au moins une surface longitudinale interne (42) et au moins une surface longitudinale externe (43) s'étendant dans la longueur de la branche (4), et une surface d'extrémité avant (44) s'étendant transversalement aux surfaces longitudinales (42, 43) sur une extrémité avant de ladite branche (4), ladite surface d'extrémité avant (44) s'étendant en face d'une surface d'extrémité arrière (31) de la partie d'extrémité (30) concernée de la face optique (3) lorsque la branche (4) est en position ouverte, ladite monture (2) comportant en outre au moins un moyen de réception (45 ; 32) d'une pièce décorative (6) destinée à être rapportée de manière temporaire sur ladite monture (2), dans laquelle ledit ou chaque moyen de réception est constitué d'un trou oblong (45) ménagé dans une branche (4) et débouchant uniquement dans sa surface d'extrémité avant (44) ou d'un trou oblong (32) ménagé dans une partie d'extrémité (30) de la face optique (3) et débouchant uniquement dans sa surface d'extrémité arrière (31), ledit ou chaque trou oblong (45 ; 32) étant destiné à former une glissière de réception de la pièce décorative (6),
ladite monture (2) étant **caractérisée en ce que** le ou chaque trou oblong (45 ; 32) présente, à partir de la surface d'extrémité concernée (44 ; 31), une portion d'entrée rectiligne prolongée par une portion terminale inclinée par rapport à la portion d'entrée pour former une rampe intérieure (46 ; 33).

2. Monture (2) selon la revendication 1, dans laquelle le ou chaque trou oblong (45 ; 32) est soit ménagé dans la matière constitutive de la branche (4) ou de la partie d'extrémité (30) de la face optique (3), soit est prévu dans un insert (47) fixé dans une encoche ménagée dans la branche (4) ou dans la partie d'extrémité (30) de la face optique (3).

3. Monture (2) selon l'une quelconque des revendications précédentes, dans laquelle le ou chaque trou oblong (45 ; 32) débouche dans une surface d'extrémité (44; 31) et vient directement en regard de l'autre surface d'extrémité (31 ; 44) en vis-à-vis lorsque la branche (4) est en position ouverte, de sorte que ledit trou oblong (45 ; 32) est recouvert par cette autre surface d'extrémité (31 ; 44) en vis-à-vis lorsque la branche (4) est en position ouverte.

4. Monture (2) selon l'une quelconque des revendications précédentes, dans laquelle les parties d'extrémité (30) de la face optique (3) sont sensiblement jointives, et de préférence en arasement, avec les surfaces longitudinales externes (43) des branches (4), un jeu (J) étant prévu entre les surfaces d'extrémité, respectivement avant (44) et arrière (31), desdites branches (4) et desdites parties d'extrémité (30).

5. Ensemble optique pour lunettes (1) comprenant :
- une monture (2) conforme à l'une quelconque des revendications précédentes ; et
- au moins une pièce décorative (6) comprenant au moins une épingle (61) élastiquement déformable prévue pour être glissée à l'intérieur d'au moins un trou oblong (45 ; 32) de la monture (2), au moins un élément décoratif (62) prévue pour s'étendre à l'extérieur du trou oblong (45) et de la monture (2), notamment en regard de la surface longitudinale externe (43) de la branche (4) et/ou en regard de la partie d'extrémité (30) de la face optique (3), et un élément de liaison (63) entre l'épingle (61) et l'élément décoratif (62),
dans lequel la ou chaque épingle (61) est engagée et maintenue à l'intérieur d'un trou oblong (45 ; 32) de la monture (2), l'élément de liaison (63) s'étend entre les deux surfaces d'extrémité (44 ; 31) concernées de la branche (4) et de la partie d'extrémité (30) de la face optique (3) lorsque ladite branche (4) est en position ouverte, et l'élément décoratif (62) s'étend à l'extérieur du trou oblong (45 ; 32) et de la monture (2),
et dans lequel l'épingle (61) de la pièce décorative (6) présente une forme courbe.

6. Ensemble optique selon la revendication 5, dans lequel l'épingle (61) de la pièce décorative (6) présente une portion initiale rectiligne prolongée par une portion terminale courbée.

7. Lunettes (1) comportant un ensemble optique conforme à l'une quelconque des revendications 5 et 6.

## Patentansprüche

1. Fassung (2) einer Brille (1), aufweisend eine optische Seite (3), die zum Tragen der Gläser (10) bestimmt ist, und zwei Bügel (4), die an zwei Endabschnitten (30) der optischen Seite (3) zwischen einer geöffneten Position und einer geschlossenen Position angelenkt sind, wobei jeder Bügel (4) mindestens eine innere Längsfläche (42) und mindestens eine äußere Längsfläche (43) aufweist, die sich in der Länge des Bügels (4) erstrecken und eine vordere Endfläche (44), die sich transversal zu den Längsflächen (42, 43) über ein vorderes Ende des Bügels (4) erstreckt, wobei sich die vordere Endfläche (44) gegenüber einer hinteren Endfläche (31) des entsprechenden Endabschnitts (30) der optischen Seite (3) erstreckt, wenn der Bügel (4) in geöffneter Position ist, wobei die Fassung (2) ferner mindestens ein Aufnahmemittel (45; 32) eines Zierstücks (6) aufweist, das bestimmt ist, vorübergehend auf der Fassung (2) angebracht zu sein, wobei das oder jedes Aufnahmemittel aus einem Langloch (45) besteht, das in einem Bügel (4) eingerichtet ist und nur in seiner vorderen Endfläche (44) ausmündet, oder einem Langloch (32), das in einem Endabschnitt (30) der optischen Seite (3) eingerichtet ist und nur in ihrer hinteren Endfläche (31) ausmündet, wobei das oder jedes Langloch (45; 32) bestimmt ist, eine Aufnahmegleitschiene des Zierstücks (6) zu bilden,
wobei die Fassung (2) **dadurch gekennzeichnet ist, dass** das oder jedes Langloch (45; 32), ausgehend von der betroffenen Endfläche (44; 31), einen geraden Eingangsabschnitt aufweist, verlängert durch einen in Bezug auf den Eingangsabschnitt geneigten Endabschnitt, um einen innere Rampe (46; 33) zu bilden.

2. Fassung (2) nach Anspruch 1, wobei das oder jedes Langloch (45; 32) entweder in dem Material eingerichtet ist, das den Bügel (4) oder den Endabschnitt (30) der optischen Seite (3) bildet, oder in einem Einsatz (47) vorgesehen ist, der in einer Nut befestigt ist, die im Bügel (4) oder im Endabschnitt (30) der optischen Seite (3) eingerichtet ist.

3. Fassung (2) nach einem der vorangehenden Ansprüche, wobei das oder jedes Langloch (45; 32) in einer Endfläche (44; 31) ausmündet und direkt der anderen Endfläche (31; 44) zugewandt gegenüber kommt, wenn der Bügel (4) in geöffneter Position ist, so dass das Langloch (45; 32) von dieser anderen Endfläche (31; 44) gegenüber bedeckt ist, wenn der Bügel (4) in geöffneter Position ist.

4. Fassung (2) nach einem der vorangehenden Ansprüche, wobei die Endabschnitte (30) der optischen Seite (3) etwa aneinanderstoßen und vorzugsweise abgeglichen mit den äußeren Längsflächen (43) der Bügel (4) sind, wobei ein Spiel (J) zwischen der jeweiligen vorderen (44) und hinteren (31) Endfläche der Bügel (4) und der Endabschnitte (30) vorgesehen ist.

5. Optische Einheit für Brille (1), umfassend:
- eine Fassung (2) nach einem der vorangehenden Ansprüche; und
- mindestens ein Zierstück (6), umfassend mindestens eine elastisch verformbare Nadel (61), die vorgesehen ist, in das Innere mindestens eines Langlochs (45; 32) der Fassung (2) gesteckt zu werden, mindestens ein dekoratives Element (62), das vorgesehen ist, sich außerhalb des Langlochs (45) und der Fassung (2) zu erstrecken, insbesondere der äußeren Längsfläche (43) des Bügels (4) zugewandt und/oder dem Endabschnitt (30) der optischen Seite (3) zugewandt, und ein Verbindungselement (63) zwischen der Nadel (61) und dem dekorativen Element (62),
wobei die oder jede Nadel (61) in das Innere eines Langlochs (45; 32) der Fassung (2) eingeführt ist und gehalten wird, sich das Verbindungselement (63) zwischen den zwei betroffenen Endflächen (44; 31) des Bügels (4) und dem Endabschnitt (30) der optischen Seite (3) erstreckt, wenn der Bügel (4) in geöffneter Position ist, und sich das dekorative Element (62) außerhalb des Langlochs (45; 32) und der Fassung (2) erstreckt,
und wobei die Nadel (61) des Zierstücks (6) eine gekrümmte Form aufweist.

6. Optische Einheit nach Anspruch 5, wobei die Nadel (61) des Zierstücks (6) einen geraden Anfangsabschnitt aufweist, verlängert durch einen gekrümmten Endabschnitt.

7. Brille (1), aufweisend eine optische Einheit nach einem der Ansprüche 5 und 6.

## Claims

1. A frame (2) for eyeglasses (1) comprising of an optical face (3) designed for accommodating the lenses (10) and two side arms (4) joined with hinges onto the two end portions (30) of said optical face (3) between an open position and a closed position, each side arm (4) having at least one inner longitudinal surface (42) and at least one outer longitudinal surface (43) extending along the length of the side arm (4), and a front end surface (44) extending transversely to the longitudinal surfaces (42, 43) over a front end of said side arm (4), said front end surface (44) extending to face a rear end surface (31) of the relevant end portion (30) of the optical face (3) when the side arm (4) is in the open position, said frame (2) further including at least one means for receiving (45 ; 32) a decorative piece (6) designed to be attached in a temporary manner to said frame (2), wherein the said or each receiving means consists of a slotted hole (45) formed in one side arm (4) and opening only into its front end surface (44) or of a slotted hole (32) formed in an end portion (30) of the optical face (3) and opening only into its rear end surface (31), the said or each slotted hole (45 ; 32) being designed to form a slide channel for receiving the decorative piece (6),
said frame (2) being **characterised in that** the or each slotted hole (45 ; 32) has, from the relevant end surface (44 ; 31), a lead in portion that is rectilinear and extended by a terminal portion that is inclined relative to the lead in portion to form an interior ramp (46 ; 33).

2. A frame (2) according to claim 1, wherein the or each slotted hole (45 ; 32) is either formed in the constituent material of the side arm (4) or of the end portion (30) of the optical face (3) or is provided in an insert (47) fixed in a notch formed in the side arm (4) or in the end portion (30) of the optical face (3).

3. A frame (2) according to any one of the preceding claims, wherein the or each slotted hole (45 ; 32) opens into an end surface (44 ; 31) and comes to be directly in front of the other end surface (31; 44) so as to face it when the side arm (4) is in the open position, such that said slotted hole (45 ; 32) is covered by the other end surface (31 ; 44) facing it when the side arm (4) is in the open position.

4. A frame (2) according to any one of the preceding claims, wherein the end portions (30) of the optical face (3) are substantially contiguous, and are preferably flush, with the outer longitudinal surfaces (43) of the side arms (4), a clearance (J) being provided between the front end surface (44) and rear end surface (31) respectively, of said side arms (4) and said end portions (30).

5. An optical assembly for eyeglasses (1) comprising of :
- a frame (2) according to any one of the preceding claims ; and
- at least one decorative piece (6) comprising of at least one resiliently deformable pin (61) designed to be slid into at least one slotted hole (45 ; 32) of the frame (2), at least one decorative element (62) designed to extend to the exterior of the slotted hole (45) and the frame (2), in particular facing the outer longitudinal surface (43) of the side arm (4) and / or facing the end portion (30) of the optical face (3) and a linking element (63) between the pin (61) and the decorative element (62),
wherein the or each pin (61) is engaged and held within a slotted hole (45 ; 32) of the frame (2), the linking element (63) extends between the two relevant end surfaces (44, 31) of the side arm (4) and the end portion (30) of the optical face (3) when said side arm (4) is in the open position, and the decorative element (62) extends to the exterior of the slotted hole (45 ; 32). and the frame (2),
and wherein the pin (61) of the decorative piece (6) has a curved shape.

6. An optical assembly according to claim 5, wherein the pin (61) of the decorative piece (6) has a rectilinear initial portion extended by a curved terminal portion.

7. Eyeglasses (1) including an optical assembly according to any one of claims 5 and 6.
